# EUROPEAN PATENT SPECIFICATION

(11) **EP 2 712 743 B1**
(45) Date of publication and mention of the grant of the patent: **13.09.2017**
(21) Application number: 12190257.1
(22) Date of filing: 26.10.2012
(51) Int. Cl.: B60B 5/02, B60B 1/00, B60B 1/08, B60B 1/14, B62M 6/60

(54) **Motor housing integrated-type spoke for electric bicycle, manufacturing method thereof, wheel assembly having the same and manufacturing method thereof**
Im Motorgehäuse integrierte Speiche für elektrische Fahrräder, Herstellungsverfahren dafür, Radanordnung damit und Herstellungsverfahren dafür
Rayon de type intégré au carter de moteur pour bicyclette électrique, son procédé de fabrication, ensemble de roue l'utilisant et son procédé de fabrication

(30) Priority: 19.09.2012 KR 20120104249
(43) Date of publication of application: 02.04.2014
(73) Proprietor: Mando Corporation, Pyeongtaek-si, Gyeonggi-do (KR)
(72) Inventor: Kim, Jeong Rae, Seoul (KR); Ko, Chang Bok, Gyunggi-Do (KR)
(74) Representative: Pfenning, Meinig & Partner mbB

(56) References cited:
- EP-A1- 2 457 816
- EP-A1- 2 595 285
- WO-A1-00/68026
- WO-A1-2005/051681
- WO-A1-2011/141446
- CN-Y- 2 633 603
- CN-Y- 201 333 895
- DE-A1- 1 955 568
- DE-A1- 10 116 071
- JP-A- S5 675 201
- JP-U- H0 612 020
- US-A- 4 280 736
- US-A1- 2010 052 454
- US-A1- 2012 150 377

## Description

### BACKGROUND

### 1. Field

Embodiments of the present disclosure relate to a wheel assembly, for an electric bicycle, and more particularly, to a wheel assembly comprising a motor housing integrated-type spoke structure for an electric bicycle capable of enabling a motor to be easily installed at a motor driven bicycle and ensuring easy manufacturing and easy assembly process.

### 2. Description of the Related Art

In general, a bicycle is a means of transportation for a short distance, and widely used for enhancement of heath or as a hobby.

In recent years, an electric bicycle having a motor has been developed to be driven by a driving force of the motor so as to travel in long distance, or reduce physical exhaustion.

The motor installed on the bicycle to provide a driving force is used while being installed on a front wheel or a rear wheel (hereinafter, referred to as a wheel in common) of the bicycle, or on a frame constituting a body of the bicycle. In a case of having the motor installed on the frame, in order to transfer a driving force of the motor to the wheel, a power transmission member is additionally needed. Accordingly, the motor is installed on the wheel to directly transfer the driving force to the wheel.

Meanwhile, the wheel is constituted by a metal rim having a tire installed at an outer surface thereof, a hub to which a rotation shaft of the wheel is coupled, and a spoke connecting the hub to the rim.

In installing the motor on the wheel, an installation member is additionally used, thereby leading to an inconvenience in assembly process. In order to support the motor of weight, the wheel is constituted by components formed of metal, thereby increasing the cost of the bicycle.

CN 2 633 603 Y discloses a wheel assembly for an electric bicycle comprising a rim provided in a ring shape and having a rubber wheel installed at an outer circumferential surface thereof, and a spoke structure integrated with a plurality of spokes, which are formed of plastic and radially extending from a center of the spoke structure, and a motor housing, which is provided at the center of the spoke structure and formed of material having a rigidity larger than rigidity of the spokes to accommodate a motor, through an injection molding, wherein a reinforcing member having rigidity larger than a rigidity of the spoke is provided at an end portion of each of the plurality of spokes coupled to the rim, thereby improving a rigidity of the rubber wheel.

CN 201 333 895 Y and JP H 06 120 20 U each discloses the use of a reinforcing member formed of a material having a rigidity larger than that of the material of the spokes provided at the end portion of each of the spokes coupled to the rim.

Each of WO-A-2011/141446 and US-A-2010/052454 discloses a motorized bicycle comprising a motor cover installed on a motor housing to close an open end portion of the motor housing through which a motor is accommodated. US-A-2010/052 454 further shows that the motor housing is provided with a coupling hole having a screw thread so that a coupling bolt that passes through the motor cover is screwed into the coupling hole.

JP 556 75 201 A refers to a plastic wheel for a vehicle, wherein a metallic insert bush with protruding and recessed parts on its peripheral surface is embedded in a boss of wheel main body. A hub body is forcibly fitted to the insert bush.

WO-A-00/68026 describes a bicycle wheel comprising a metal rim and a hub. The metal rim and the hub are interconnected by means of a plastic spoke body. The spoke body is an injection-moulded spoke body, which has a central part in one piece, in a radial manner. The distal ends of the spokes are solidly connected to the metal rim by means of anchoring elements.

DE-A-101 16 071 shows a wheel for a bicycle, comprising a hub, a rim, at least one spoke and at least an connecting flange. All components are separately manufactured. The spoke is connected with the rim by means of the flange.

US-A-2012/150377 discloses an electric power assist system for use with a pedal vehicle. The system ha an electric motorized wheel including a plurality of spokes extending from the motor housing to the rim, at least one spoke configured so as to define within it a battery compartment in which at least one power supply battery is deployed, wherein the battery compartment lies in the planar region substantially defined by the outer sides of the rim.

### SUMMARY

Therefore, it is an aspect of the present disclosure to provide a capable of enabling a motor to be easily installed to the bicycle and capable of improving the rigidity while reducing the weight and cost of the wheel.

It is another aspect of the present disclosure to provide a capable of ensuring easy manufacturing and assembly process.

Additional aspects of the disclosure will be set forth in part in the description which follows and, in part, will be obvious from the description, or may be learned by practice of the disclosure.

In accordance with the present invention, a wheel assembly is configured as defined in claim 1.

Preferred embodiments of this wheel assembly are represented in the dependent claims.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a perspective view illustrating an electric bicycle in accordance with one embodiment of the preset disclosure.
FIG. 2 is a plan view of FIG. 1
FIG. 3 is a side view of FIG. 1.
FIG. 4 is an exploded perspective view illustrating a wheel assembly of the electric bicycle in accordance with the one embodiment of the preset disclosure.
FIG. 5 is an assembled perspective view of FIG. 4.

### DETAILED DESCRIPTION

Reference will now be made in detail to the embodiments of the present disclosure, examples of which are illustrated in the accompanying drawings, wherein like reference numerals refer to like elements throughout.

The present disclosure is characterized in a wheel assembly for an electric bicycle, a manufacturing method thereof, a motor housing integrated-type spoke structure provided on a wheel and a manufacturing method thereof. Prior to the description of the characteristics of the present disclosure, an electric bicycle adopted with the present disclosure will be described in brief.

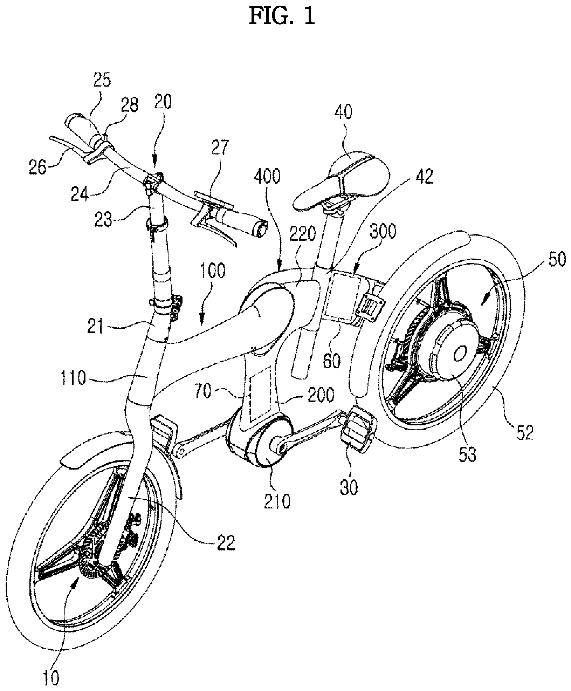

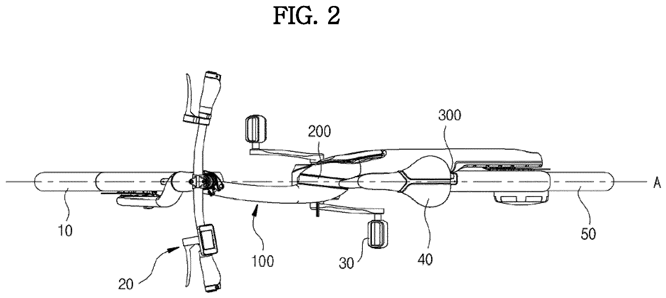

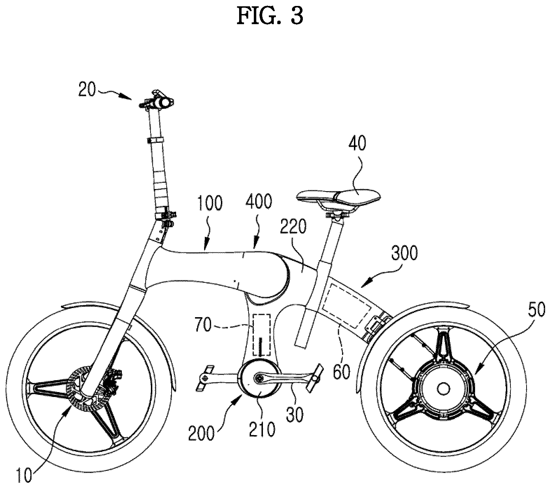

FIG. 1 is a perspective view illustrating an electric bicycle in accordance with one embodiment of the preset disclosure, FIG. 2 is a plan view of FIG. 1, and FIG. 3 is a side view of FIG. 1.

Referring to FIGS. 1 to 3, an electric bicycle in accordance with an embodiment of the present disclosure includes a front frame 100 provided with a front wheel 10 and a handle portion 20, a center frame 200 provided with a pedal 30 and a saddle 40, and a rear frame 300 provided with a rear wheel 50. The front frame 100, the center frame 200 and the rear frame 300 are coupled to one another so as to be rotated on a hinge coupling portion 400 of the center frame 200.

The front frame 100 is provided in the form of a bar having an interior space. A handle tube 110 is provided at one end of the front frame 100, and the center frame 200 is rotatably coupled to the other end of the front frame 100. The handle tube 110 is provided in hollowness such that a handle stem 21 is rotatably coupled to the handle tube 110. The handle stem 21 is provided with a front wheel fixing frame 22 at a lower side of the handle tube 110, and provided with a handle fixing frame 23 at an upper side of the handle tube 110. The front wheel fixing frame 22 is provided by partially bending the handle stem 21 from a center to a lateral side such the front wheel 10 is disposed in the same line ('A' of FIG. 2) with the rear wheel 50. The handle fixing frame 23 supports the center of a handle bar 24 that is provided in the form of a bar. Each end portion of the handle bar 24 is provided with a grip 25 and a brake lever 26 for braking the front wheel 10 and the rear wheel 50. A display apparatus 27 is detachably installed at one side of the handle bar 24 to display information of the electric bicycle, such as speed change or battery of the electric bicycle, and a lever 28 is installed at the other side of the handle bar 24 for speed change.

The center frame 200 has an interior space and is provided in the form of a bar. The pedal 30 is provided at one end of the center frame 200, and the front frame 100 and the rear frame 300 are rotatably coupled to the other end of the center frame 200. The one pair of pedals 30 is provided so as to be rotated on a pedal coupling portion 210 provided on the center frame 200. At an inside of the pedal coupling portion 210, a generator (not shown) is provided to convert a rotary power of the pedal 30 into an electric energy, and the electric energy charges a battery 60 electrically connected to the generator. At the interior space of the center frame 200, an engine control unit (ECU) 70 is provided for the electrical connection and control between the generator and other electronic components.

In addition, the center frame 200 may include a saddle frame 220 on which the saddle 40 is installed. The saddle frame 220 is provided at a rear side thereof with a saddle tube 42 on which the saddle 40 is installed. A saddle rod (not shown) is coupled to the saddle tube 42 to adjust the height of the saddle 40.

The rear frame 300 has an interior space and provided in the form of a bar. The rear wheel 50 is rotatably installed at one end of the rear frame 300, and the center frame 200 is rotatably installed at the other end of the rear frame 300.

At the interior space of the rear frame 300, the battery 60 and a battery management system (not shown) are provided that are electrically connected to the ECU 70 provided on the center frame 200. The motor installed on the rear frame 300 is disposed on the rear wheel 50. The motor (not shown) is accommodated in a motor housing 53 that is installed on the rear wheel 50, and configured to rotate the rear wheel 50 by receiving a driving force from the battery 60 according to the control of the ECU 70.

In this case, the motor is implemented using an outer rotor scheme. The outer rotor scheme is a type of a motor driving scheme, which has a fixed center shaft and a rotor disposed at a periphery of the center shaft, and the rotor is connected to a rotating body, such as a wheel, to rotate together with the rotating body.

As described above, the front frame 100, the center frame 200 and the rear frame 300 are provided in a foldable structure that enables the front frame 100 and the rear frame 300 are rotated on the center frame 200 by the hinge coupling portion 400.

Hereinafter, a motor housing integrated-type spoke structure and a wheel assembly having the same will be described in detail. The wheel assembly may be used for as the front wheel 10 or the rear wheel 50 of the electric bicycle described above. In the drawings, the motor and the motor housing 53 are illustrated as provided on the rear wheel 50. Accordingly, the following description will be made in relation that the wheel assembly represents the rear wheel of the electric bicycle.

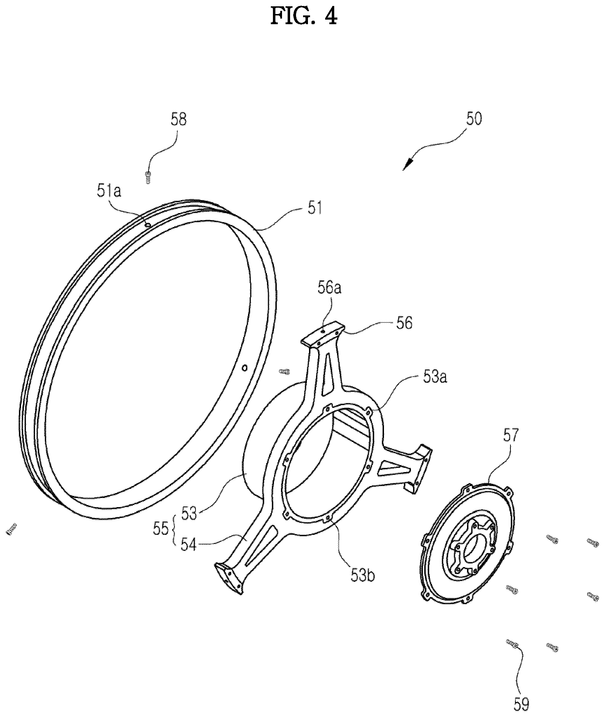

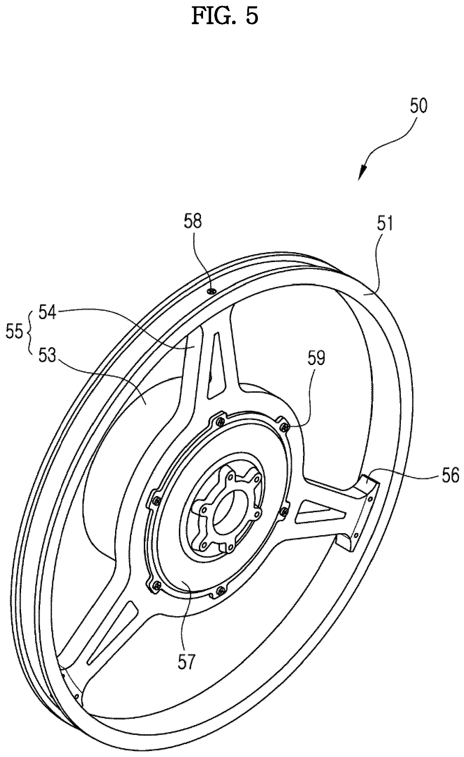

FIG. 4 is an exploded perspective view illustrating a wheel assembly of the electric bicycle in accordance with one embodiment of the preset disclosure, and FIG. 5 is an assembled perspective view of FIG. 4.

Referring to FIGS. 4 and 5, the wheel assembly is provided with a rim 51 having a ring shape, and a spoke structure 55 coupled to the rim 51.

The rim 51 is formed of metal, for example, an aluminum alloy, to improve the rigidity of the rim 51. A tire ('52' in FIG. 1) is installed at an outer circumferential surface of the rim 51.

The motor housing integrated-type spoke structure 55 is provided with a plurality of spokes 54 radially extending from a center thereof, and the motor housing 53 to accommodate the motor (not shown).

In more detail, the motor housing integrated-type spoke structure 55 is formed as an integral body by performing injection molding on the plurality of spokes 54, which is formed of plastic, with the motor housing 53, which has rigidity larger than that of the spoke 54 and provided at the center of the plurality of spokes 54. In this case, the motor housing 53 may be formed of metal having rigidity larger than that of the spoke 54, for example, an aluminum alloy. Other material having rigidity larger than that of the spoke 54 may be available for the material of the motor housing 53.

In addition, the motor housing 53 has one side that is opened to accommodate the motor. The spoke 54 is formed to surround the outer circumference of the open side of the motor housing 53. The motor housing 53 is provided with protrusions 53a, which are spaced apart from one another along the outer circumferential surface of the motor housing 53 and to which a motor cover 57, which is to be described later, is coupled.

The motor housing integrated-type spoke structure 55 has an end portion of each spoke 54 installed at an inner circumferential surface of the rim 51. In order to improve the rigidity of the spoke structure 55, a reinforcing member 56 may be provided at the end portion of each spoke 54. The reinforcing member 56 may be formed of material having rigidity larger than that of the spoke 54, for example, an aluminum alloy, tungsten, and stainless steel.

The reinforcing member 56 may be integrally formed with the spoke 54 through injection molding, similar to the motor housing 53. That is, the motor housing integrated-type spoke structure 55 is formed by integrally forming the plurality of spokes 54, the motor housing 53 and the reinforcing member 56 through injection molding. The injection molding may be implemented using an insert molding process.

A method of manufacturing the motor housing integrated-type spoke structure 55 is disclosed here, as an example only. First, the motor housing 53 and the reinforcing member 56 each having a predetermined rigidity are formed. Thereafter, the motor housing 53 and the reinforcing member 56 are inserted into a mold, and the motor housing integrated-type spoke structure 55 having the plurality of spokes 54 and formed of plastic is molded while being integrated with the motor housing 53 and the reinforcing member 56 through an injection molding. In this case, the motor housing integrated-type spoke structure 55 is molded such that the motor housing 53 is disposed on the center of the motor housing integrated-type spoke structure 55 so as to have one side open while the reinforcing member 56 is disposed at each end portion of the spoke 54, as an integral body as shown in FIG. 4.

The rim 51 having a ring shape is manufactured before the manufacturing of the motor integrated-type spoke structure 55 as such, and the motor housing integrated-type spoke structure 55 is manufactured as such and coupled to the rim 51, thereby completing the manufacturing of the wheel assembly.

The motor housing integrated spoke structure 55 is coupled to the rim 51 in a structure to couple the motor housing integrated spoke structure 55 to the inner circumferential surface of the rim 51 through a fastening bolt 58. That is, the reinforcing member 56 provided at each end portion of the spoke 54 coupled to the rim 51 is provided with a fastening hole 56a having a screw thread formed at an inner circumferential surface thereof, and the rim 51 is provided with a through-hole 51a at a position corresponding to the fastening hole 56a. Accordingly, by screwing a fastening bolt 58 to the fastening hole 56a through the through-hole 51a, the spoke structure 55 is coupled to the rim 51.

Meanwhile, the motor housing integrated-type spoke structure 55 is provided with the motor cover 57 that is installed on the motor housing 53 to cover the open side of the motor housing 53. As describe above, the motor housing 53 is provided with the protrusion 53a to be coupled to the motor cover 57. The protrusion 53a is provided with a coupling hole 53b having a screw thread, and as a coupling bolt 59 is screwed to the coupling hole 53b while passing through the motor cover 57, the motor housing 53 is coupled to the motor cover 57. The protrusion 53a serves to secure the coupling between the motor housing 53 and the spoke 54 while facilitating rotating the motor housing 53 and the wheel 50.

As described above, the wheel assembly for the electric bicycle is provided with the motor housing integrated-type spoke structure 55 and the rim 51 while having the spoke 54 and the motor housing 53 of different material integrally formed with each other through insert injection, thereby reducing the cost and the weight. In addition, no installation component is needed to install the motor, thereby ensuring an easy assembly process.

Although the description has been made in relation that the wheel assembly having the motor housing integrated-type spoke structure 55 is provided to be used as the rear wheel 50, the present disclosure is not limited thereto. In a case where a motor is installed at the front wheel 10, the front wheel 10 may have the same structure of the rear wheel 50 described above.

Meanwhile, as for a wheel assembly of the front wheel 10, on which a motor is not installed, the wheel assembly is provided with a rim and a spoke structure. The spoke structure may be installed on the rim while including a hub (not shown) coupled to a rotating shaft (not shown) of the wheel 10, and a plurality of spokes integrally formed with the hub. That is, similar to the motor housing integrated-type spoke structure 55 described above, the spoke structure of the front wheel 10 may be formed as an integral body composed of the plurality of spokes, the hub provided at the center of the spokes, and a reinforcing member provided at each end portion of the spokes through injection molding.

Although a few embodiments of the present disclosure have been shown and described, it would be appreciated by those skilled in the art that changes may be made in these embodiments without departing from the scope defined in the appended claims.

## Claims

1. A wheel assembly for an electric bicycle comprising:
a rim (51) provided in a ring shape and having a rubber wheel installed at an outer circumferential surface thereof; and
a spoke structure (55) integrated with a plurality of spokes (54), which are formed of plastic and radially extending from a center of the spoke structure, and a motor housing (53), which is provided at the center of the spoke structure (55) and formed of material having a rigidity larger than rigidity of the spokes (54) to accommodate a motor, through an injection molding,
wherein a reinforcing member (56) having rigidity larger than a rigidity of the spoke (54) is provided at an end portion of each of the plurality of spokes (54) coupled to the rim (51), thereby improving a rigidity of the rubber wheel,
**characterized in that** the reinforcing member (56) facing the rim (51) is provided with a fastening hole (56a) having a screw thread, and the rim (51) is provided with a through hole (51a) at a position corresponding to the fastening hole, so that the rim (51) is coupled to the spoke structure (55) by screwing a fastening bolt (58) to the fastening hole (56a) while passing through the through-hole (51a).

2. The wheel assembly of claim 1, wherein the reinforcing member (56) is integrally formed with the spoke (54) through an insert injection.

3. The wheel assembly of claim 1, further comprising a motor cover (57) installed on the motor housing (53) to close an open end portion of the motor housing (53) through which a motor is accommodated.

4. The wheel assembly of claim 3, wherein the motor housing (53) is provided with a plurality of protrusions (53a) protruding outwardly while being spaced apart from one another along an outer circumference of the open end portion of the motor housing (53), and
the protrusion (53a) is provided with a coupling hole (53b) having a screw thread, so that a coupling bolt (59) that passes through the motor cover (57) is screwed to the coupling hole (53b).

## Patentansprüche

1. Radanordnung für ein elektrisches Fahrrad, welche aufweist:
eine Felge (51), die eine Ringform hat und ein an ihrer äußeren Umfangsfläche installiertes Gummirad hat; und
eine Speichenstruktur (55), die mit mehreren Speichen (54), die aus Kunststoff gebildet sind und sich radial von einer Mitte der Speichenstruktur weg erstrecken, und einem Motorgehäuse (53), das in der Mitte der Speichenstruktur (55) angeordnet und aus einem Material gebildet ist, dessen Steifigkeit größer als die Steifigkeit der Speichen (54) ist, zum Aufnehmen eines Motors, durch Spritzgießen integriert ist,
wobei ein Verstärkungsteil (56), das eine Steifigkeit hat, die größer als eine Steifigkeit der Speiche (54) ist, an einem Endbereich von jeder der mehreren mit der Felge (51) gekoppelten Speichen (54) angeordnet ist, wodurch die Steifigkeit des Gummirads verbessert wird,
**dadurch gekennzeichnet, dass** das der Felge (51) zugewandte Verstärkungsteil (56) mit einem Befestigungsloch (56a) mit einem Schraubgewinde versehen ist, und die Felge (51) mit einem Durchgangsloch (51a) an der Position entsprechend dem Befestigungsloch versehen ist, so dass die Felge (51) mit der Speichenstruktur (55) durch Schrauben eines Befestigungsbolzens (58) in das Befestigungsloch (56a), während er durch das Durchgangsloch (51a) hindurchgeht, gekoppelt ist.

2. Radanordnung nach Anspruch 1, bei der das Verstärkungsteil (56) durch eine Einsatzinjektion einstückig gebildet ist.

3. Radanordnung nach Anspruch 1, weiterhin aufweisend eine Motorabdeckung (57), die an dem Motorgehäuse (53) installiert ist, um einen offenen Endbereich des Motorgehäuses (53), durch den ein Motor aufgenommen wird, zu schließen.

4. Radanordnung nach Anspruch 3, bei der das Motorgehäuse (53) mit mehreren Vorsprüngen (53a) versehen ist, die nach außen vorstehen, während sie entlang eines äußeren Umfangs des offenen Endbereichs des Motorgehäuses (53) einen gegenseitigen Abstand aufweisen, und der Vorsprung (53a) mit einem Kopplungsloch (53b) mit einem Schraubgewinde versehen ist, so dass ein Kopplungsbolzen (59), der durch die Motorabdeckung (57) hindurchgeht, in das Kopplungsloch (53b) geschraubt ist.

## Revendications

1. Assemblage de roue pour une bicyclette électrique comprenant :
une jante (51) qui est constituée selon une forme d'anneau et qui comporte une roue en caoutchouc installée au niveau de sa surface circonférentielle externe ; et
une structure de rayons (55) qui est intégrée de manière à comporter une pluralité de rayons (54), lesquels rayons sont formés en une matière plastique et s'étendent radialement depuis un centre de la structure de rayons, et un carter de moteur (53), lequel carter est prévu au centre de la structure de rayons (55) et est formé en un matériau qui présente une rigidité qui est plus importante qu'une rigidité des rayons (54) de manière à recevoir un moteur, par l'intermédiaire d'un moulage par injection,
dans lequel un élément de renforcement (56) qui présente une rigidité qui est plus importante qu'une rigidité des rayons (54) est prévu au niveau d'une partie d'extrémité de chacun de la pluralité de rayons (54) qui sont couplés à la jante (51), ce qui améliore une rigidité de la roue en caoutchouc,
**caractérisé en ce que** l'élément de renforcement (56) qui fait face à la jante (51) est muni d'un trou de fixation (56a) qui comporte un filetage, et la jante (51) est munie d'un trou traversant (51a) en une position qui correspond au trou de fixation, de telle sorte que la jante (51) est couplée à la structure de rayons (55) en vissant un boulon de fixation (58) sur le trou de fixation (56a) tout en passant au travers du trou traversant (51a). ,

2. Assemblage de roue selon la revendication 1, dans lequel l'élément de renforcement (56) est formé d'un seul tenant avec le rayon (54) par l'intermédiaire d'une injection de pièce d'insertion.

3. Assemblage de roue selon la revendication 1, comprenant en outre un capot de moteur (57) qui est installé sur le carter de moteur (53) de manière à fermer une partie d'extrémité ouverte du carter de moteur (53) au travers de laquelle un moteur est reçu.

4. Assemblage de roue selon la revendication 3, dans lequel le carter de moteur (53) est muni d'une pluralité de protubérances (53a) qui font saillie vers l'extérieur tout en étant espacées les unes des autres le long d'une circonférence externe de la partie d'extrémité ouverte du carter de moteur (53) ; et
la protubérance (53a) est munie d'un trou de couplage (53b) qui comporte un filetage, de telle sorte qu'un boulon de couplage (59) qui passe au travers du capot de moteur (57) est vissé sur le trou de couplage (53b).
